# DEMANDE DE BREVET EUROPEEN

(11) **EP 2 402 223 A1**
(43) Date de publication de la demande: **04.01.2012**
(21) Numéro de dépôt: 11170967.1
(22) Date de dépôt: 22.06.2011
(51) Int. Cl.: B60S 1/38

(54) **Connecteur d'essuie-glace multifonctions**

(30) Priorité: 30.06.2010 FR 1002776
(71) Demandeur: Valeo Systèmes D'Essuyage, 78321 Le Mesnil Saint Denis (FR)
(72) Inventeur: Jarasson, Jean-Michel, 78321 Le Mesnil-Saint-Denis (FR); Izabel, Vincent, 91380 Chilly Mazarin (FR); Caillot, Gérald, 78720 Cernay-la-Ville (FR)
(74) Mandataire: Tran, Chi-Hai

(57) **Abrégé**

Connecteur d'un balai d'essuie-glace sur un bras d'essuie-glace, comportant un dispositif pour l'alimentation en un liquide lave-vitre de buses de distribution implantées dans ledit balai et comportant un dispositif de liaison électrique apte à relier un connecteur électrique alimenté par le circuit électrique du véhicule à un dispositif chauffant (12) implantée dans ledit balai, caractérisé en ce que ledit dispositif de liaison électrique est constitué par un module monobloc (17) rapporté sur la structure dudit connecteur (4).

## Description

Le domaine de la présente invention est celui des équipements pour les véhicules, et plus particulièrement celui des équipements pour l'essuyage du pare-brise des automobiles.

Les automobiles sont couramment équipées de systèmes d'essuyage et de lavage pour assurer un essuyage et un lavage du pare-brise et éviter que la vision qu'a le conducteur de son environnement soit perturbée. Ces systèmes d'essuyage comprennent des bras effectuant un mouvement de va-et-vient angulaire au bout desquels sont installés des balais allongés, porteurs eux-mêmes de lames racleuses réalisées en une matière élastique. Ces lames frottent sur le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets, soit, dans une version plus récente dénommée "flat blade" (pour "balai plat"), d'un ensemble semi-rigide qui maintient la lame racleuse sur toute sa longueur. Dans les deux solutions le balai est rattaché au bras tournant par un ensemble constitué d'un connecteur et d'un adaptateur. Le connecteur est une pièce qui est fixée directement sur la structure du balai ou directement sur le flat blade, l'adaptateur étant une pièce intermédiaire qui permet la fixation du connecteur sur le bras de l'essuie-glace. Ces deux pièces sont reliées l'une à l'autre par un axe transversal qui autorise leur rotation relative.

Les essuie-glaces sont également équipés de dispositifs d'amenée d'un liquide lave-vitre qui est acheminé depuis un réservoir situé sur le véhicule et qui est pulvérisé en direction du pare-brise par des gicleurs situés généralement sur le capot ou sur la grille de baie de pare-brise, soit sur l'essuie-glace lui-même pour une meilleure distribution du liquide. Dans le cas de buses placées sur les balais, le liquide lave-vitre est acheminé, avant d'être réparti entre elles, par des canalisations qui sont fixées sur le bras de l'essuie-glace et qui sont raccordées au système de distribution du balai au niveau du connecteur. Le connecteur comporte ainsi des orifices aptes à recevoir, par une liaison étanche, les embouts desdites canalisations.

Dans le domaine de l'après-vente des véhicules automobiles, on trouve également des dispositifs de chauffage de l'essuie-glace pour dégeler le balai en cas de grand froid et éviter qu'il colle au pare-brise sous l'action du gel. Ces dispositifs, qui sont plus spécialement adaptés à des balais flat blade, comportent généralement un dispositif chauffant intégré dans l'ensemble porteur de la lame racleuse et sur laquelle sont déposées des résistances électriques. Ils nécessitent eux aussi un dispositif de connexion électrique, placé au niveau du connecteur, pour transmettre au dispositif chauffant le courant électrique provenant du véhicule.

Les connecteurs mécaniques récents assurent donc un nombre plus important de fonctions et doivent en conséquence intégrer un plus grand nombre d'éléments. Il devient nécessaire de simplifier leur réalisation. Si les conduits assurant la circulation du liquide lave-vitre à l'intérieur du connecteur peuvent être réalisés de façon relativement simple par leur prise en compte lors de la conception du moule du connecteur, il n'en est pas de même des moyens de connexion électriques qui doivent être implantés séparément. Cette situation complique la conception et la réalisation d'un tel connecteur.

La présente invention a pour but de remédier à cet inconvénient en proposant un connecteur pour balai d'essuie-glace intégrant des moyens de connexion électrique qui soient de conception simple et faciles à implanter.

A cet effet, l'invention a pour objet un connecteur entre un balai d'essuie-glace et un bras d'essuie-glace, comprenant un dispositif pour l'alimentation en un liquide lave-vitre et un dispositif de liaison électrique apte à relier un connecteur électrique alimenté par le circuit électrique du véhicule à un dispositif chauffant intégré audit balai, innovant en ce que ledit dispositif de liaison électrique est constitué par un module de liaison électrique rapporté sur la structure dudit connecteur. Ce connecteur

La réalisation séparée et distinct du module assurant la connexion électrique à l'intérieur du connecteur permet de simplifier la conception et la réalisation du connecteur.

De façon préférentielle, le module de liaison électrique comprend au moins une piste conductrice (13) assemblée sur ou dans un support, par exemple par surmoulage ou assemblage, en matériau plastique formant ainsi un module monobloc. La réalisation de ce support formant gaine périphérique assure l'isolation électrique du module vis-à-vis des éléments extérieurs et notamment de l'eau (pluie ou liquide lave-vitre) tombée sur le connecteur.

Dans un mode particulier de réalisation, le connecteur comprend des ouvertures dans son circuit d'alimentation en liquide lave-vitre et le module de liaison électrique obture ces ouvertures, avantageusement de manière étanche. Ces ouvertures, qui sont généralement générées lors du moulage du connecteur, doivent être obturées en utilisation et le module, et plus particulièrement le support de ce module est, ici, utilisée pour réaliser les bouchons d'obturation de ces ouvertures. Dans ce cas, le support du module de liaison électrique comprend au moins un bras latéral au bout duquel une palette ou capot est formé pour obturer lesdites ouvertures.

De façon préférentielle ledit module comporte à une de ses extrémités une prise conformée pour s'insérer dans un logement pratiqué dans la structure du connecteur et apte à assurer le support ou la solidarisation dudit module.

Dans un premier mode de réalisation ladite prise est maintenue ou fixée dans ledit logement par collage.

Dans un second mode de réalisation ladite prise est maintenue ou fixée dans ledit logement par soudage à ultrasons.

Dans un troisième mode de réalisation ladite prise est maintenue ou fixée dans ledit logement par clipsage.

Préférentiellement ledit module comporte à une de ses extrémités une liaison électrique constituée par au moins une piste conductrice recourbée formant frotteur et apte à coopérer avec une résistance métallique déposée sur ledit dispositif chauffant.

Avantageusement, le module de liaison électrique comprend une casquette reliée audit module par un pont de liaison.

Avantageusement encore, le connecteur comprend au moins un fil métallique ou piste conductrice noyée dans une un support formant par exemple une gaine en matériau plastique, ledit support, ledit pont de liaison et ladite casquette formant un ensemble monobloc. Cet ensemble est ainsi unitaire car le support, ledit pont de liaison et ladite casquette sont moulés simultanément.

Dans un autre mode de réalisation, la casquette constitue un point de rattachement à la structure dudit connecteur, ledit module comportant une partie fragile formant pièce à casser ou fusible entre le support et la casquette. On réalise ainsi la pièce d'habillage appelée casquette en même temps que le module et on s'assure par une partie fragile que les sollicitations exercées sur cette casquette ne vont pas perturber l'étanchéité réalisée par les bouchons d'obturation des ouvertures ou les connexions électriques assurées par le module, par exemple en cas de choc.

L'invention revendique également un balai d'essuie-glace muni d'un connecteur tel que décrit ci-dessus et un essuie-glace pour véhicule sur lequel est monté un tel balai.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue générale, en perspective, d'un essuie-glace pour véhicule automobile ;
- la figure 2 est une vue de détail de la figure 1 ;
- la figure 3 est une vue en perspective d'un connecteur de balai d'essuie-glace, configuré pour recevoir un module de connexion électrique selon un mode de réalisation de l'invention ;
- la figure 4 est une vue de l'arrière du connecteur de la figure 3 sur lequel est monté un module de connexion électrique selon un mode de réalisation de l' invention ;
- la figure 5 est une vue d'un connecteur électrique selon l'art antérieur ;
- la figure 6 est une vue en perspective d'un module de connexion électrique selon un mode de réalisation de l' invention ;
- la figure 7 est une vue en perspective du connecteur de la figure 3, sur lequel est monté le module de connexion électrique de la figure 6 ;
- la figure 8 est une vue en perspective d'un module de connexion électrique selon un mode alternatif de réalisation de l'invention.

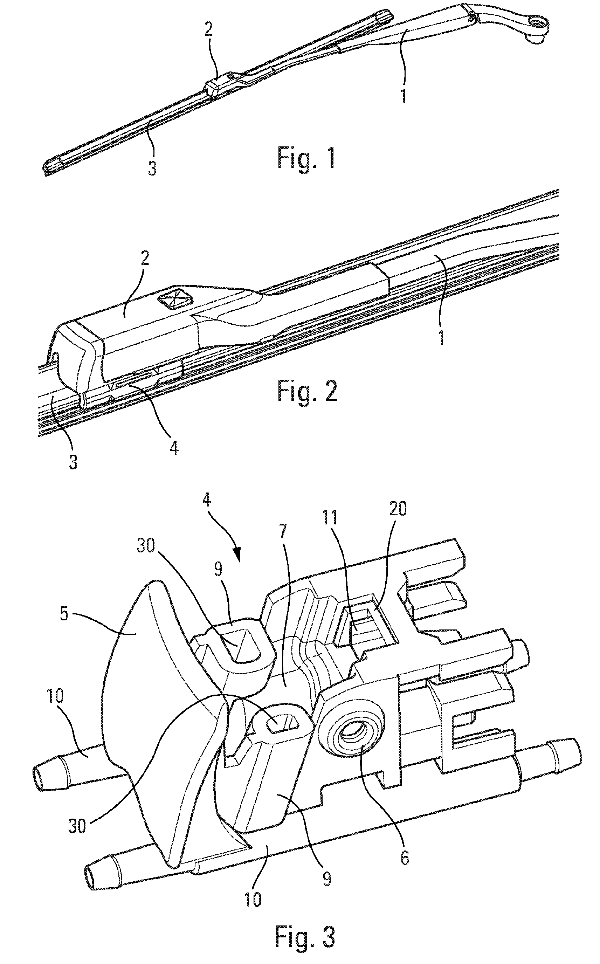

En se référant aux figures 1 et 2, on voit un essuie-glace composé classiquement d'un porte-balai ou bras 1 se terminant à son extrémité externe par une chape 2, qui est fixée par sertissage sur le bras 1 et qui a pour fonction, par l'intermédiaire d'un adaptateur, de supporter le balai 3 équipé de son connecteur 4. Cette chape peut également être formée dans l'extrémité de bras et constituer un ensemble unitaire avec le bras.

En se référant maintenant à la figure 3, on voit un connecteur 4 destiné à assurer le transfert d'une part du liquide lave-vitre en provenance d'un connecteur hydraulique (non représenté) vers une rampe de distribution positionnée sur le balai 3 d'un essuie-glace, et d'autre part d'un courant électrique depuis un connecteur électrique (non représenté) vers un dispositif chauffant intégré au même balai 3. Le connecteur 4 a une forme globalement parallélépipédique comportant à son extrémité avant une face d'habillage 5, dénommée casquette par les gens du métier, qui ferme l'extrémité de la chape 2 et participe à l'esthétique de l'essuie-glace. Il porte également un axe transversal 6 qui autorise sa rotation relative par rapport au bras 1. En variante, on notera que le lien entre le connecteur 4 et le bras 1 peut être opéré par l'intermédiaire d'un adaptateur.

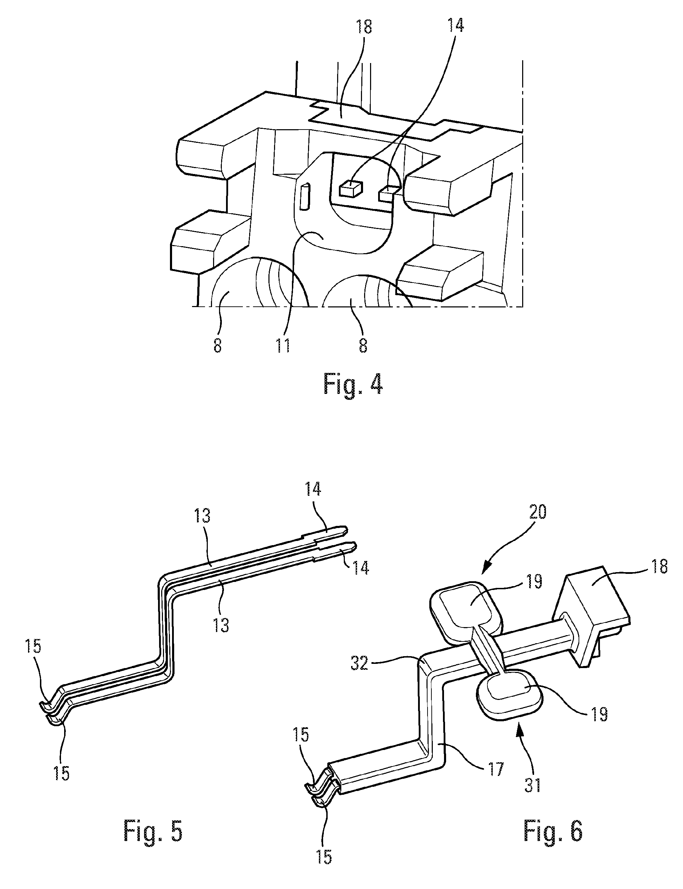

Le connecteur 4 est traversé par deux circuits de distribution 7 du liquide lave-vitre se raccordant par deux orifices 8, visibles sur la figure 4, à un connecteur hydraulique, non représenté, ce dernier étant relié par des canalisations appropriées au bras 1 et in fine à un réservoir de liquide lave-vitre installé sur le véhicule. Les deux circuits de distribution 7 sont constitués chacun par un premier canal alimenté par l'orifice 8 et qui s'étend dans une direction sensiblement parallèle à la direction longitudinale du balai 3, puis par un puits 9 qui s'étend transversalement au premier canal, et enfin par une rampe de distribution 10 positionnées latéralement du connecteur 4 et qui s'étend dans une direction parallèle à la direction d'extension du premier canal. Les puits 9 est donc une canalisation qui relie fluidiquement le premier canal et la rampe d'un même côté du connecteur 4. Pour des raisons liées au moulage du connecteur, les deux puits 9 s'étendent vers le haut du connecteur jusqu'à déboucher à l'extérieur de ce dernier formant ainsi des ouvertures 30. Ces puits s'étendent aussi vers le bas du connecteur jusqu'à déboucher dans les rampes de distribution 10 qui alimentent des buses de projection du liquide sur le pare-brise, qui sont positionnées tout le long du balai 3. En utilisation, les ouvertures 30 des puits 9 doivent être refermées à leur partie haute pour obliger le liquide du lave-vitre à se diriger vers les rampes de distribution 10 et ne pas se répandre à l'intérieur du connecteur 4.

Comme on peut le voir sur les figures 3 et 4, le connecteur comporte en outre une cavité 11 destinée à recevoir un connecteur électrique, non représenté, qui est relié au circuit électrique du véhicule et qui apporte au balai 3 l'énergie électrique nécessaire à l'alimentation électrique du dispositif chauffant.

Le connecteur 4 comprend en plus un logement 20 qui prend la forme d'un épaulement pratiqué sur la paroi externe du connecteur autour de la cavité 11.

En se référant maintenant aux figures 5 et 6 on voit les des pistes conductrices ou lamelles de connexion 13 d'alimentation électrique qui relient le connecteur électrique au dispositif chauffant, ces pistes circulant au travers du connecteur 4 quand celui-ci est assemblé. Ces pistes sont rigides ou flexibles et sont fabriquées dans un matériau tel qu'un alliage d'aluminium ou du cuivre.

Sur la figure 5 on voit deux pistes métalliques et conductrices 13 nues avec à une extrémité des cosses 14 destinées à coopérer avec des cosses femelles situées dans le connecteur électrique, et à l'autre extrémité des frotteurs 15 destinés à venir en contact contre des pistes de circulation du courant électrique constituant le dispositif chauffant. Ces pistes conductrices 13 comprennent chacune deux parties primaires qui s'étendent dans une direction parallèle l'une par rapport à l'autre et une partie intermédiaire qui relie entre elles les deux partie primaires, cette partie intermédiaire s'étendant de manière transversale, avantageusement orthogonale, à la direction d'extension des parties primaires.

Sur la figure 6, les deux pistes conductrices sont assemblées sur ou dans un support 32. Quand ce support 32 forme une gaine, les pistes conductrices 13 sont noyées au moins partiellement dans un surmoulage ou un assemblage en matériau plastique, par exemple polymère, formant ainsi un module 17 de liaison électrique au travers du connecteur 4. Dans le cas où le surmoulage est total, ce dernier laisse cependant libres les cosses 14 et les frotteurs 15 pour qu'ils assurent leur fonction de contact avec les éléments connexes correspondants. Le module de liaison électrique 17 forme une pièce monobloc ou unitaire. Ce module 17 est donc une pièce distincte, séparée puis rapporté sur le connecteur 4 par soudage par ultrasons, collage ou clippage.

L'extrémité du module 17 qui porte les cosses 14 de connexion au connecteur électrique a la forme d'une prise 18, du centre de laquelle dépassent les deux cosses 14, qui a vocation à s'insérer dans le logement 20 prévu à et effet dans la structure du connecteur 4. La prise 18 présente donc un bord de forme complémentaire à l'épaulement qui délimite le logement 20.

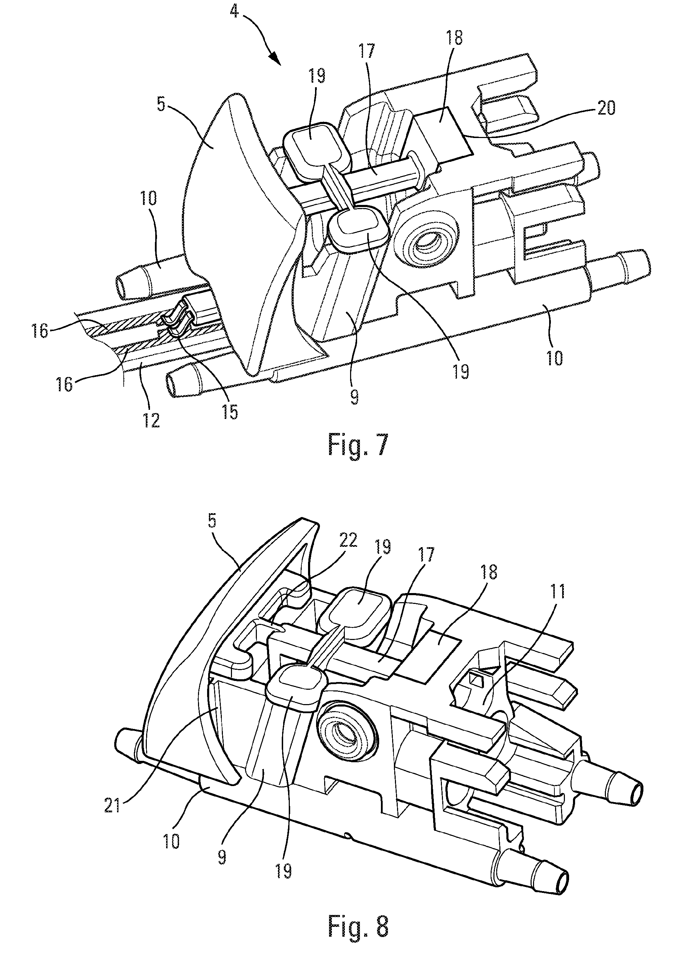

La prise 18 sert également de moyen de fixation du module 17 au connecteur 4 de sorte à maintenir en place le module 17 quand le connecteur électrique externe est inséré dans le connecteur 4. L'extrémité qui porte les frotteurs 15 ne comporte pas de matériau plastique, les deux frotteurs restant en appui contre les résistances 16 (figure 7) pour assurer un bon contact électrique avec elles. Ces frotteurs 15 présentent une forme courbée de sorte à garantir le contact électrique sur les résistances quelque soit la position angulaire du balais et son connecteur par rapport au bras. Transversalement et au niveau la première partie des pistes conductrices 13, le module 17 comporte deux bras latéraux 31 se terminant sous la forme de palettes 19 qui ont pour fonction, après montage du module 17 sur le connecteur 4, d'obturer les ouvertures 30 des puits 9 en leur servant de couvercle pour garantir l'étanchéité du circuit de liquide lave-vitre.

La figure 7 montre le connecteur 4 en version assemblé, le module de liaison électrique 17 étant installé dans la structure du connecteur 4. Il repose d'un côté par sa prise 18 qui est insérée dans le logement 20 et de l'autre par l'appui qu'il exerce par ses frotteurs 15 contre le dispositif chauffant 12 et ses résistances 16. Dans cette configuration, on note que le module de liaison électrique 17 porte sur les puits 9 au moyen des palettes 19 au droit des ouvertures 30.

De façon préférentielle le module 17 est, après sa mise en place, solidarisé ou fixé au connecteur 4. Cette fixation intervient par collage ou par soudage par ultrasons de la prise 18 du module 17 dans le logement 20 du connecteur 4. Le module de liaison électrique 17 peut également, dans une variante de réalisation, être clipsé sur la structure du connecteur, moyennant l'introduction de joints d'étanchéité en tant que de besoin pour garantir l'étanchéité du circuit de lave-vitre en obturant les ouvertures 30 des puits 9.

En se référant maintenant à la figure 8, on va décrire un deuxième mode de réalisation. Les éléments du connecteur 4 identiques au premier mode de réalisation sont désignés par la même référence et ne sont pas décrits à nouveau. Ici, la casquette 5 n'est pas partie intégrante de la structure du connecteur 4 mais est maintenue en place sur lui par des glissières 21 positionnées sur ses deux faces latérales, sur lesquelles elle peut coulisser. Elle est par ailleurs rattachée au module de liaison électrique 17 auquel elle appartient, par un pont de liaison 22. Ce pont 22 a une section plus faible que la section nominale du module 17 de sorte qu'il constitue une pièce à casser ou pièce fusible pour le cas où des contraintes importantes se développeraient dans la casquette en cours d'utilisation. On comprend donc que la casquette 5 est moulée simultanément avec le support 32, par exemple une gaine qui entoure au moins partiellement les pistes conductrices 13. Cette fonction de fragilité entre la casquette 5 et le reste du module électrique 17, assurée par le pont 22, garantit la connexion électrique des frotteurs 15 avec les résistances 16 malgré des éventuelles déformations ou chocs imposées à la casquette. Ces déformations ne se transmettent donc pas au reste du module 17.

La réalisation d'un connecteur selon l'invention se réalise en deux temps. D'une part le connecteur 4 est réalisé par moulage avec la réalisation des conduits de circulation interne du liquide lave-vitre et celle d'un logement 20 apte à recevoir une prise 18 d'un module de liaison 17. La réalisation du circuit de circulation du liquide nécessite la création de puits 9 pour pouvoir former des conduits internes tout en permettant le démoulage du connecteur. D'autre part les pistes conductrices 13 sont noyées, totalement ou partiellement, dans un plastique ou une résine en matériau polymère, en laissant libre les deux extrémités pour former des cosses 14 et des frotteurs 15, de façon à former un module de liaison électrique 17 adapté à son implantation dans un connecteur 4. La fabrication du module de liaison prévoit simultanément la réalisation des deux bras latéraux 31 et des palettes ou capot 19 et, à son extrémité destinée à coopérer avec le connecteur électrique, celle d'une prise 18 conformée pour s'adapter au logement 20 et de laquelle émergent les deux cosses 14. Dans le cas du second mode de réalisation la fabrication du module de liaison prévoit également la réalisation de la casquette 5 et de son pont de liaison 22.

L'assemblage du module 17 sur le connecteur 4 s'effectue simplement en le glissant à l'intérieur du connecteur et en positionnant la prise 18 dans son logement 20. Du fait de la conformation donnée au module 17, les frotteurs 15 viendront naturellement en appui contre les résistances 16 du dispositif chauffant 12 lors du sertissage du connecteur 4 sur le balai d'essuie-glace 3. De même, les bras latéraux 31 se retrouveront au dessus de l'ouverture 30 des puits 9 qu'ils obtureront par leurs palettes ou capots 19 qui assureront la fonction de couvercle étanche.

Dans le cas du second mode de réalisation l'installation du module 17 sur le connecteur 4 se fait par une translation dans les glissières 21 et selon une direction sensiblement parallèle à la direction longitudinale des rampes de distribution 10, la casquette se mettant en place en même temps que la prise 18 entre dans son logement 20 et que le capots 19 couvrent les ouvertures des puits 9.

L'opération d'assemblage se termine par la fixation ou solidarisation de la prise 18 dans son logement 20 par collage, par soudage aux ultrasons ou bien encore par clipsage.

## Revendications

1. Connecteur (4) entre un balai d'essuie-glace (3) et un bras d'essuie-glace (1), comprenant un dispositif pour l'alimentation en un liquide lave-vitre et un dispositif de liaison électrique apte à relier un connecteur électrique alimenté par le circuit électrique du véhicule à un dispositif chauffant (12) intégré audit balai (3),
**caractérisé en ce que** ledit dispositif de liaison électrique est constitué par un module de liaison électrique (17) rapporté sur la structure dudit connecteur (4).

2. Connecteur selon la revendication 1 dans lequel ledit module de liaison électrique (17) comprend au moins une piste conductrice (13) assemblée sur ou dans un support (32) en matériau plastique, ledit module étant monobloc.

3. Connecteur selon la revendication 2 comprenant en outre des ouvertures (30) dans son circuit d'alimentation en liquide lave-vitre, **caractérisé en ce que** le module de liaison électrique (17) obture lesdites ouvertures (30).

4. Connecteur selon la revendication 3 dans lequel le support (32) du module de liaison électrique (17) comprend au moins un bras latéral (31) au bout duquel une palette (9) est formée pour obturer lesdites ouvertures (30).

5. Connecteur selon l'une des revendications 1 à 4 dans lequel ledit module de liaison électrique (17) comprend à une de ses extrémités une prise (18) conformée pour s'insérer dans un logement (20) pratiqué dans la structure du connecteur et apte à assurer la fixation dudit module (17).

6. Connecteur selon la revendication 5 dans lequel ladite prise est solidarisée dans ledit logement par collage.

7. Connecteur selon la revendication 5 dans lequel ladite prise est solidarisée dans ledit logement par un soudage par ultrasons.

8. Connecteur selon la revendication 5 dans lequel ladite prise est solidarisée dans ledit logement par clipsage.

9. Connecteur selon l'une des revendications 1 à 8 dans lequel ledit module de liaison électrique (17) comprend à une de ses extrémités une liaison électrique constituée par au moins une piste conductrice (13) recourbée formant frotteur (15) et apte à coopérer avec une résistance (16) dudit dispositif chauffant (12).

10. Connecteur selon l'une des revendications 1 à 9 dans lequel ledit module de liaison électrique (17) comprend une casquette (5) reliée audit module (17) par un pont de liaison (22).

11. Connecteur selon la revendication 10 dans lequel au moins une piste conductrice (13) est noyée dans un support (32) en matériau plastique, ledit support, ledit pont de liaison (22) et ladite casquette (5) formant un ensemble monobloc.

12. Balai d'essuie-glace muni d'un connecteur (4) selon l'une des revendications 1 à 11.

13. Essuie-glace pour véhicule sur lequel est monté un balai (3) selon la revendication précédente.
